# EUROPÄISCHE PATENTSCHRIFT

(11) **EP 2 346 682 B1**
(45) Veröffentlichungstag und Bekanntmachung des Hinweises auf die Patenterteilung: **14.11.2012**
(21) Anmeldenummer: 09782816.4
(22) Anmeldetag: 09.09.2009
(51) Int. Cl.: B32B 21/08, B27N 3/02, B27N 1/00

(54) **MEHRSCHICHTIGE LIGNUCELLULOSEHALTIGE FORMKÖRPER MIT GERINGER FORMALDEHYDEMISSION**
MULTI-LAYERED LIGNOCELLULOSIC MOLDED BODIES WITH LOW FORMALDEHYDE EMISSIONS
CORPS MOULÉS MULTICOUCHES CONTENANT DE LA LIGNOCELLULOSE, À FAIBLE ÉMISSION DE FORMALDÉHYDE

(30) Priorität: 19.09.2008 EP 08164736
(43) Veröffentlichungstag der Anmeldung: 27.07.2011
(73) Patentinhaber: BASF SE, 67056 Ludwigshafen (DE)
(72) Erfinder: KÄSMAYR, Daniel, 67061 Ludwigshafen (DE); WEINKÖTZ, Stephan, 67434 Neustadt (DE); BEIL, Christian, 67551 Worms (DE); SCHMIDT, Michael, 67346 Speyer (DE); FINKENAUER, Michael, 67593 Westhofen (DE)
(86) Internationale Anmeldenummer: PCT/EP2009/061690
(87) Internationale Veröffentlichungsnummer: WO 2010/031718

(56) Entgegenhaltungen:
- EP-A- 0 346 864
- EP-A- 0 699 510
- DE-A1- 19 606 393
- DE-A1- 19 729 161
- DE-C1- 19 956 420
- DE-U- 7 440 894

## Beschreibung

Die vorliegende Erfindung betrifft einen mehrschichtigen lignocellulosehaltigen Formkörper wie in den Ansprüchen definiert.

Ferner betrifft die vorliegende Erfindung ein Verfahren zur Herstellung eines mehrschichtigen lignocellulosehaltigen Formkörpers sowie die Verwendung eines mehrschichtigen lignocellulosehaltigen Formkörpers zur Herstellung von Gegenständen aller Art und im Baubereich sowie zur Herstellung von Möbeln und Möbelteilen, von Verpackungsmaterialien, im Hausbau oder im Innenausbau oder in Kraftfahrzeugen.

Werkstoffe auf Basis von Lignocellulose sind bekannt. Wichtige Beispiele für lignocellulosehaltige Stoffe sind Holzteile, wie Holzlagen, Holzstreifen, Holzspäne, oder Holzfasern, wobei die Holzfasern gegebenenfalls auch von holzfaserhaltigen Pflanzen, wie Flachs, Hanf, Sonnenblumen, Topinambur oder Raps stammen können. Ausgangsmaterialien für solche Holzteile oder Holzpartikel sind üblicherweise Durchforstungshölzer, Industrieresthölzer und Gebrauchthölzer sowie holzfaserhaltige Pflanzen.

Die Aufbereitung zu den gewünschten lignocellulosehaltigen Stoffen, wie Holzpartikel, erfolgt nach bekannten Verfahren, siehe zum Beispiel M. Dunky, P. Niemt, Holzwerkstoffe und Leime, S. 91-156, Springer Verlag Heidelberg, 2002.

Lignocellulosehaltige Formkörper, im Falle von Holz als Lignocellulose hier auch Holzwerkstoffe genannt, sind eine kostengünstige und Ressourcen schonende Alternative zu Massivholz und haben große Bedeutung, insbesondere im Möbelbau und als Baumaterialien, erlangt. Als Ausgangsstoffe für Holzwerkstoffe dienen in der Regel Holzlagen unterschiedlicher Stärke, Holzstreifen, Holzspäne oder Holzfasern aus verschiedenen Hölzern. Solche Holzteile oder Holzpartikel werden üblicherweise bei erhöhter Temperatur mit natürlichen und/oder synthetischen Bindemitteln und gegebenenfalls unter Zugabe weiterer Additive zu platten- oder strangförmigen Holzwerkstoffen verpresst. Beispiele für solche lignocellulosehaltigen Formkörper oder Holzwerkstoffe sind mitteldichte Faserplatten (MDF), Holzspanwerkstoffe - wie Spanplatten und Grobspanplatten (OSB, oriented starnd board) -, Sperrholz -wie Furniersperrholz - und Leimholz.

Als Bindemittel werden in der Regel formaldehydhaltige Bindemittel eingesetzt, beispielsweise Harnstoff-Formaldehydharze oder melaminhaltige Harnstoff-Formaldehydharze. Die Harze werden durch Polykondensation von Formaldehyd mit Harnstoff und/oder Melamin hergestellt. Die Verwendung derartiger Formaldehydharze kann dazu führen, dass im fertigen Holzwerkstoff freier Formaldehyd vorliegt. Durch Hydrolyse der Polykondensate kann zusätzlicher Formaldehyd freigesetzt werden. Der im Holzwerkstoff enthaltene freie Formaldehyd und der während der Lebensdauer des Holzwerkstoffs durch Hydrolyse freigesetzte Formaldehyd können an die Umgebung abgegeben werden.

Formaldehyd kann oberhalb bestimmter Grenzwerte beim Menschen Allergien, Haut-, Atemwegs- oder Augenreizungen verursachen. Die Reduzierung der Formaldehydemission in Bauteilen, vor allem im Innenbereich, ist daher eine wichtige Herausforderung.

Aus dem Stand der Technik sind folgende Maßnahmen bekannt die Formaldehydemission aus Holzwerkstoffen zu reduzieren oder zu unterbinden:
Der Einsatz von Aminoplastleimen, die mit wenig Formaldehyd hergestellt wurden, die Nachbehandlung der fertigen Holzwerkstoffe mit sogenannten Formaldehydfängern, wie Amingruppen-enthaltenden Verbindungen und das Aufbringen einer Deckschicht auf den Holzwerkstoff wobei die Deckschicht mit einem Leim erhalten wird, dem größere Mengen Melamin und/oder Harnstoff, als Formaldehydfänger, zugesetzt wurde.

Derartige Maßnahmen sind aber noch nicht voll befriedigend. Der Herstellung der Aminoplastleime mit weniger Formaldehyd oder der Zusatz von Formaldehydfängern zum Aminoplastleim führt dazu, daß der Leim langsamer härtet, was die Verweilzeiten in der Heißpresse verlängert und somit die Wirtschaftlichkeit der Holzwerkstoffherstellung verschlechtert.

DE-A 2 306771 (Deutsche Novopan GmbH) beschreibt ein Verfahren zur Herstellung von Spanplatten aus beispielsweise mit Bindemittel versetzten Holzspänen die mindestens dreischichtig gestreut und anschließend heißverpresst werden, wobei für die Deckschicht ein bestimmtes Phenolharz als Bindemittel verwendet wird und in der Mittelschicht beispielsweise Isocyanat als Bindemittel verwendet wird.

Bindemittel des Typs (b) der vorliegenden Erfindung offenbart DE-A 2 306771 nicht.

DE 28 32 509 B1 (Deutsche Novopan GmbH) beschreibt Spanplatten mit einer Mittelschicht die mit Harnstoff-Formaldehydharz, Isocyanat und Zusatz von Harnstoff hergestellt wurde und einer Deckschicht die mit Harnstoff-Formaldehydharz und zugesetztem Harnstoff hergestellt wurde.

Bindemittel des Typs (b) der vorliegenden Erfindung offenbart DE 28 32 509 B1 nicht.

EP 0 012 169 A1 (Fraunhofer-Gesellschaft) beschreibt dreischichtige Spanplatten deren Deckschicht mit Harnstoff-Formadehydharz verleimt wurde und deren Mittelschicht mit Diisocyanaten mit oder ohne Zusatz von Harnstoff hergestellt wurden.

Bindemittel des Typs (b) der vorliegenden Erfindung offenbart EP 0 012 169 A1 nicht.

Aus DE-U-74 40 894 sind mehrschichtige Spanplatten aus mit Bindemittel versetzten Holzspänen, Holzfasem und anderen lignocellulosehaltigen Rohstoffen bekannt.

Aus EP-A-699 510 sind Holzspanplatten mit auf ein Minimum reduzierter Formaldehydabgabe bekannt, bei denen zunächst den Holzspänen kondensiertes
Tannin in relativ geringen Mengen beigegeben, z.B. 0,5% bezogen auf das Gewicht der Holzspäne, und nach dem Preßvorgang werden die Platten dann in an sich bekannter Weise mit einem formaldehydreaktiven Stoff besprüht.

Aus EP-A-346 864 ist ein Verfahren zur Herstellung von mehrschichtigen Spanplatten durch Heißverpressen von mit Bindemitteln versetzten Holzspänen unter Einsatz von Isocyanat als Bindemittel in der Kernschicht.

Bindemittel des Typs (b) der vorliegende Erfindung offenbaren DE-U-74 40 894, EP-A-699 510 und EP-A-346 864 nicht.

Die im Stand der Technik beschriebenen mehrschichtigen Formkörper lassen in puncto mechanische Belastbarkeiten (zum Beispiel Abhebefestigkeit der Schichten gemäß Prüfnorm EN 311) sowie Reduktion der Formaldehydemissionen noch Raum für Verbesserungen.

Die Aufgabe der vorliegenden Erfindung war demnach, die im Stand der Technik aufgezeigten Nachteile zu überwinden. Insbesondere sollten mehrschichtige lignocellulosehaltige Fomkörper aufgezeigt werden deren Formaldehydemission reduziert oder praktisch nicht vorhanden sein sollte und wobei die mehrschichtigen lignocellulosehaltigen Fomkörper gute mechanische Eigenschaften haben sollten.

Die Aufgabe wurde gelöst durch einen mehrschichtigen lignucellulosehaltigen Formkörper aus
A) einer Mittelschicht oder mehreren Mittelschichten, enthaltend lignocellulosehaltige Partikel, welche erhältlich ist/sind durch Verwendung eines Bindemittels (a) und
B) einer Deckschicht oder mehreren Deckschichten, enthaltend lignocellulosehaltige Partikel, welche erhältlich ist/sind durch Verwendung eines Bindemittels (b),
dadurch gekennzeichnet, dass das Bindemittel (a) ausgewählt wird aus der Gruppe bestehend aus (a1) Formaldehydharzen und (a2) einem organischen Isocyanat mit mindestens zwei Isocyanatgruppen;
wobei das Bindemittel (b) folgende Komponenten enthält:

Eine wässrige Komponente (I) enthaltend
(i) ein Polymer A, welches aus folgenden Monomeren aufgebaut ist:
   a) 80 bis 100 Gew.-% wenigstens einer ethylenisch ungesättigten Mono- und/oder Dicarbonsäure (Monomer(e) A1) und
   b) 0 bis 20 Gew.-% wenigstens eines weiteren ethylenisch ungesättigten Monomeren, welches sich von den Monomeren A1 unterscheldet (Monomer(e) A2) und gegebenenfalls
(ii) einen niedermolekularen Vernetzer mit mindestens zwei funktionellen Gruppen welche ausgewählt sind aus der Gruppe Hydroxy, Carbonsäure und deren Derivate, primäres, sekundäres und tertiäres Amin, Epoxy, Aldehyd
und gegebenenfalls eine Komponente (II) als wässrige Dispersion, enthaltend ein oder mehrere Polymer(e) M, welches aus folgenden Monomeren aufgebaut ist:
a) 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M1), und
b) 50 bis 100 Gew.-% wengistens eines weiteren ethylenisch ungesättigten Monomeren, welches sich von den Monomeren M1 unterscheidet (Monomer(e) M2)
sowie gegebenenfalls übliche Additive als Komponente (III)
und wobei, das Bindemittel (b) für den Fall, daß das Bindemittel (a) ein Formaldehydharz enthält, Formaldehydfänger enthält.

Der Begriff Lignocellulose ist dem Fachmann bekannt. Wichtige Beispiele für lignocellulosehaltige Partikel sind Holzteile, wie Holzlagen, Holzstreifen, Holzspäne, oder Holzfasern, wobei die Holzfasern gegebenenfalls auch von holzfaserhaltigen Pflanzen, wie Flachs, Hanf, Sonnenblumen, Topinambur oder Raps stammen können.

Bevorzugt als lignocellulosehaltige Partikel sind Holzpartikel, insbesondere Holzfasern oder Holzspäne.

Das Bindemittel (a) enthält ein Formaldehydharz, vorzugsweise Aminoplastharz (a1) und/oder ein organisches Isocyanant mit mindestens zwei Isocyanatgruppen (a2).

Wenn das Bindemittel (a) ein Aminoplastharz enthält , enthält das Bindemittel (a) in der Regel auch die dem Fachmann bekannten für Aminoplaste im allgemeinen eingesetzten und üblicherweise als Härter bezeichneten Substanzen, wie Ammoniumsulfat oder Ammoniumnitrat oder anorganische oder organische Säuren, zum Beispiel Schwefelsäure, Ameisensäure, oder säureregenerierende Substanzen, wie Aluminiumchlorid, Aluminiumsulfat, jeweils in den üblichen, geringen Mengen, beispielsweise im Bereich von 0,1 Gew.-% bis 6 Gew.-%, bezogen auf die Gesamtmenge an Aminoplastharz im Bindemittel (a).

Als Formaldehydharz werden hier Polykondensationsprodukte aus Verbindungen mit mindestes einer, gegebenenfalls teilweise mit organischen Resten substituierten, Carbamidgruppe (die Carbamidgruppe wird auch Carboxamidgruppe genannt) und einem Aldehyd, vorzugsweise Formaldehyd, verstanden; diese Harze werden auch Aminoplastharze genannt. Als Formaldehydharze werden hierin weiterhin Phenol-Formaldehydharze verstanden.

Als gut geeignetes Formaldehydharz können alle dem Fachmann, vorzugsweise die für die Herstellung von Holzwerkstoffen bekannten, Formaldehydharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben.

Bevorzugte Formaldehydharze sind Polykondensationsprodukte aus Verbindungen mit mindestes einer, auch teilweise mit organischen Resten substituierten, Carbamidgruppe und Formaldehyd.

Besonders bevorzugte Formaldehydharze sind Harnstoff-Formaldehydharze (UF-Harze), Melamin-Formaldehydharze (MF-Harze) oder melaminhaltige Harnstoff-Formaldehydharze (MUF-Harze) sowie Phenol-Formaldehydharze (PF-Harze) und Melamin-Harnstoff-Phenol-Formaldehydharze (MUPF-Harze).

Ganz besonders bevorzugte Formaldehydharze sind Harnstoff-Formaldehydharze (UF-Harze), und Melamin-Formaldehydharze (MF-Harze), beispielsweise Kaurit^{®} oder Kauramin^{®} Leim-Typen der Firma BASF SE.

Neben den beschriebenen konventionellen Formaldehydharzen mit einem recht hohen molaren Formaldehyd : Aminogruppenverhältnis können auch Formaldehydharze mit geringerem molaren Formaldehyd : Aminogruppenverhältnis eingesetzt werden.

Derartige geeignete Formaldehydharze, insbesondere Aminoplastharze, sind Polykondensationsprodukte aus Verbindungen mit mindestes einer, auch teilweise mit organischen Resten substituierten, Aminogruppe und Aldehyd, worin das molare Verhältnis Aldehyd : gegebenenfalls teilweise mit organischen Resten substituierten AminoGruppe im Bereich von 0,3 bis 1,0, bevorzugt 0,3 bis 0,60, besonders bevorzugt 0,3 bis 0,45, ganz besonders bevorzugt 0,30 bis 0,40 liegt.

Weitere derartige geeignete Formaldehydharze, insbesondere Aminoplastharze, sind Polykondensationsprodukte aus Verbindungen mit mindestes einer Aminogruppe -NH₂ und Formaldehyd, worin das molare Verhältnis Formaldehyd : -NH₂-Gruppe im Bereich von 0,3 bis 1,0, bevorzugt 0,3 bis 0,60, besonders bevorzugt 0,3 bis 0,45, ganz besonders bevorzugt 0,30 bis 0,40 liegt.

Weitere derartige geeignete Formaldehydharze, insbesondere Aminoplastharze, sind Harnstoff-Formaldehydharze (UF-Harze), Melamin-Formaldehydharze (MF-Harze) oder melaminhaltige Harnstoff-Formaldehydharze (MUF-Harze), worin das molare Verhältnis Formaldehyd : -NH₂-Gruppe im Bereich von 0,3 bis 1,0, bevorzugt 0,3 bis 0,60, besonders bevorzugt 0,3 bis 0,45, ganz besonders bevorzugt 0,30 bis 0,40 liegt.

Weitere derartige geeignete Formaldehydharze, insbesondere Aminoplastharze, sind Harnstoff-Formaldehydharze (UF-Harze), worin das molare Verhältnis Formaldehyd : - NH₂-Gruppe im Bereich von 0,3 bis 1,0, bevorzugt 0,3 bis 0,60, besonders bevorzugt 0,3 bis 0,45, ganz besonders bevorzugt 0,30 bis 0,40 liegt.

Die oben genannten konventionellen und formaldehydärmeren Formaldehydharze, insbesondere Aminoplastharze, werden üblicherweise in flüssiger Form, meist in einem flüssigen Suspendiermittel suspendiert, vorzugsweise in wässriger Suspension, eingesetzt, können aber auch als Feststoff eingesetzt werden.

Der Feststoffgehalt der Formaldehydharz-Suspensionen, vorzugsweise wässrigen Suspension, liegt üblicherweise bei 25 bis 90 Gew.-%, vorzugsweise bei 50 bis 70 Gew.-%.

Der Feststoffgehalt eines Aminoplast-Harzes als Vertreter von Formaldehydharzen in wässriger Suspension kann zum Beispiel nach Günter Zeppenfeld, Dirk Grunwald, Klebstoffe in der Holz- und Möbelindustrie, 2. Auflage, DRW-Verlag, Seite 268 bestimmt werden. Zur Bestimmung des Feststoffgehalts von Aminoplast-Leimen wird 1 g Aminoplast-Leim in eine Wägeschale genau eingewogen, am Boden fein verteilt und 2 Stunden bei 120 °C in einem Trockenschrank getrocknet. Nach Temperierung auf Raumtemperatur in einem Exsikkator wird der Rückstand gewogen und als prozentualer Anteil der Einwaage berechnet.

Die Aminoplastharze werden nach bekannten Verfahren (siehe oben angegebene Ullmann-Literatur "Aminoplaste" und "Amino Resins", sowie oben angegebene Literatur Dunky et al.) durch Umsetzen der Carbamidgruppen-haltigen Verbindungen, vorzugsweise Harnstoff und/oder Melamin, mit den Aldehyden, vorzugsweise Formaldehyd, in den gewünschten Molverhältnissen Carbamidgruppe : Aldehyd, vorzugsweise in Wasser als Lösungsmittel, hergestellt.

Das Einstellen des gewünschten molaren Verhältnisses Aldehyd, vorzugsweise Formaldehyd : gegebenenfalls teilweise mit organischen Resten substituierten AminoGruppe kann auch durch Zusatz von -NH₂-Gruppen-tragenden Monomeren zu formaldehydreicheren fertigen, vorzugsweise kommerziellen, Aminoplastharzen geschehen. NH₂-Gruppen-tragende Monomere sind vorzugsweise Harnstoff, Melamin, besonders bevorzugt Harnstoff.

Eine andere Komponente des Bindemittels (a) ist ein organisches Isocyanat mit mindestens zwei Isocyanatgruppen (a2).

Als gut geeignetes organisches Isocyanat können alle dem Fachmann, vorzugsweise die für die Herstellung von Holzwerkstoffen oder Polyurethanen bekannten, organischen Isocyanate verwendet werden. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomereinheiten und im Mittel mindestens einer Isocyanatgruppe pro Monomereinheit.

Ein besonders bevorzugtes organisches Isocyanat ist das oligomere organische Isocyanat PMDI ("Polymeres Methylendiphenylendiisocyanat") das erhältlich ist durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18 letzter Absatz bis Seite 19, zweiter Absatz und Seite 76, fünfter Absatz).

Im Sinne der vorliegenden Erfindung sehr gut geeignete PMDI-Produkte sind die Produkte der LUPRANAT^{®}-Typenreihe der BASF SE, insbesondere LUPRANAT^{®} M 20 FB der BASF SE.

Es können auch Mischungen der beschriebenen organischen Isocyanate eingesetzt werden, wobei das Mischungsverhältnis nach derzeitigem Kenntnisstand nicht kritisch ist.

Das Bindemittel (a) kann die Komponenten (a1) und (a2) in allen beliebigen Mischungsverhältnissen oder auch alleine enthalten.

In einer bevorzugten Ausführungsform enthält das Bindemittel (a) lediglich die Komponente (a1), vorzugsweise ein Aminoplastharz, besonders bevorzugt ein UF-Harz und/oder MUF-Harz und/oder MF-Harz.

In einer weiteren bevorzugten Ausführungsform enthält das Bindemittel (a) lediglich die Komponente (a2), bevorzugt PMDI.

In einer weiteren bevorzugten Ausführungsform enthält das Bindemittel (a) die Komponente (a1), vorzugsweise ein Aminoplast, besonders bevorzugt ein UF-Harz und/oder MF-Harz und/oder MUF-Harz im Bereich von 70 bis 99,9 Gew.-% und die Komponente (a2), bevorzugt PMDI im Bereich von 0,1 bis 30 Gew.%, jeweils bezogen auf die Summe (a1) und (a2) der reinen unverdünnten Substanzen.

In einer ganz besonders bevorzugten Ausführungsform enthält das Bindemittel (a) ein UF-Harz im Bereich von 70 bis 99,9 Gew.-% und PMDI im Bereich von 0,1 bis 30 Gew.%, jeweils bezogen auf die Summe (a1) und (a2) der reinen, unverdünnten Substanzen.

Die Bindemittel (a1) und (a2) können bereits vermischt angewendet werden, es ist aber auch möglich die Bindemittel (a1) und (a2), in der Regel zunächst unvermischt, üblicherweise in separaten Schritten mit den lignocellulosehaltigen Partikeln in Berührung zu bringen.

Die Gesamtmenge des Bindemittels (a1), vorzugsweise des UF-Harzes, als reiner, unverdünnter Substanz, bezogen auf die Trockenmasse der lignocellulosehaltigen Partikel, vorzugsweise Holzpartikel, liegt im Bereich von 3 bis 50 Gew.-%, vorzugsweise 5 bis 15 Gew.-%, besonders bevorzugt 6 bis 12 Gew.-%.

Die Gesamtmenge des Bindemittels (a2), vorzugsweise des PMDI, als reiner, unverdünnter Substanz, bezogen auf die Trockenmasse der lignocellulosehaltigen Partikel, vorzugsweise Holzpartikel, liegt im Bereich von 0,5 bis 30 Gew.-%, vorzugsweise 1 bis 10 Gew.-%, besonders bevorzugt 2 bis 6 Gew.-%.

Für den Fall daß sich das Bindemittel (a)aus (a1) und (a2) zusammensetzt, liegt die Gesamtmenge des Bindemittels (a), als reine unverdünnte Substanz, bezogen auf die Trockenmasse der lignocellulosehaltigen Partikel, vorzugsweise Holzpartikel, im Bereich von 0,5 bis 30 Gew.-%, vorzugsweise 1 bis 15 Gew.-%, besonders bevorzugt 2 bis 12 Gew.-%.

Das Bindemittel (b) enthält:
Eine wässrige Komponente (I) enthaltend
   (i) ein Polymer A, welches aus folgenden Monomeren aufgebaut ist:
      a) 70 bis 100 Gew.-% wenigstens einer ethylenisch ungesättigten Mono- und/oder Dicarbonsäure (Monomer(e) A1) und
      b) 0 bis 30 Gew.-% wenigstens eines weiteren ethylenisch ungesättigten Monomeren, welches sich von den Monomeren A1 unterscheidet (Monomer(e) A2)
      und gegebenenfalls
   (ii) einen niedermolekularen Vernetzer mit mindestens zwei funktionellen Gruppen welche ausgewählt sind aus der Gruppe Hydroxy, Carbonsäure und deren Derivate, primäres, sekundäres und tertiäres Amin, Epoxy, Aldehyd
und gegebenenfalls eine Komponente (II) als wässrige Dispersion, enthaltend ein oder mehrere Polymer(e) M, welches aus folgenden Monomeren aufgebaut ist:
a) 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M1), und
b) 50 bis 100 Gew.-% wenigstens eines weiteren ethylenisch ungesättigten Monomeren, welches sich von den Monomeren M1 unterscheidet (Monomer(e) M2)
sowie gegebenenfalls übliche Additive als Komponente (III).

Das Polymer A ist aus folgenden Monomeren aufgebaut:
a) 70 bis 100 Gew.-% wenigstens einer ethylenisch ungesättigten Mono- und/oder Dicarbonsäure (Monomer(e) A1) und
b) 0 bis 30 Gew.-% wenigstens eines weiteren ethylenisch ungesättigten Monomeren, welches sich von den Monomeren A1 unterscheidet (Monomer(e) A2).

Die Herstellung von Polymeren A ist dem Fachmann geläufig und erfolgt insbesondere durch radikalisch initiierte Lösungspolymerisation beispielsweise in Wasser oder in einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988).

Als Monomere A1 kommen insbesondere 3 bis 6 C-Atome aufweisende α,β-monoethylenisch ungesättigte Mono- und Dicarbonsäuren, deren mögliche Anhydride sowie deren wasserlöslichen Salze, insbesondere deren Alkalimetallsalze, wie beispielsweise Acrylsäure, Methacrylsäure, Maleinsäure, Fumarsäure, Itaconsäure, Citraconsäure, Tetrahydrophthalsäure, bzw. deren Anhydride, wie beispielsweise Maleinsäureanhydrid, sowie die Natrium- oder Kaliumsalze der vorgenannten Säuren in Betracht. Besonders bevorzugt sind Acrylsäure, Methacrylsäure und/oder Maleinsäureanhydrid, wobei Acrylsäure und die Zweier-Kombinationen aus Acrylsäure und Maleinsäureanhydrid oder Acrylsäure und Maleinsäure insbesondere bevorzugt sind.

Als Monomer(e) A2 kommen in einfacher Weise mit Monomer(en) A1 radikalisch copolymerisierbare ethylenisch ungesättigte Verbindungen in Betracht, beispielsweise Ethylen; vinylaromatische Monomere, wie Styrol, α-Methylstyrol, o-Chlorstyrol oder Vinyltoluole; Vinylhalogenide, wie Vinylchlorid oder Vinylidenchlorid; Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat; Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, -nonyl-, -decyl- und -2-ethylhexylester, Fumar- und Maleinsäuredimethylester oder -di-n-butylester; Nitrile α,β-monoethylenisch ungesättigter Carbonsäuren, wie Acrylnitril, Methacrylnitril, Fumarsäuredinitril, Maleinsäuredinitril sowie C₄₋₈-konjugierte Diene, wie 1,3-Butadien (Butadien) und Isopren. Die genannten Monomere bilden in der Regel die Hauptmonomeren, die, bezogen auf die Gesamtmenge an Monomeren A2, einen Anteil von ≥ 50 Gew.-%, bevorzugt ≥ 80 Gew.-% und insbesondere bevorzugt ≥ 90 Gew.-% auf sich vereinen oder sogar die Gesamtmenge der Monomeren A2 bilden. In aller Regel weisen diese Monomeren in Wasser bei Normalbedingungen (20 °C, 1 atm (absolut)) lediglich eine mäßige bis geringe Löslichkeit auf.

Weitere Monomere A2, die allerdings unter den vorgenannten Bedingungen eine erhöhte Wasserlöslichkeit aufweisen, sind solche, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid; ferner Vinylsulfonsäure, 2-Acrylamido-2-methylpropansulfonsäure, Styrolsulfonsäure und deren wasserlösliche Salze sowie N-Vinylpyrrolidon; 2-Vinylpyridin, 4-Vinylpyridin; 2-Vinylimidazol; 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat.

Üblicherweise sind die vorgenannten wasserlöslichen Monomeren A2 lediglich als modifizierende Monomere in Mengen von ≤ 10 Gew.-%, bevorzugt ≤ 5 Gew.-% und insbesondere bevorzugt ≤ 3 Gew.-%, bezogen auf die Gesamtmenge an Monomeren A2, enthalten.

Weitere Monomere A2, die üblicherweise die innere Festigkeit der Verfilmungen einer Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat.

Häufig werden die vorgenannten vernetzenden Monomeren A2 in Mengen von ≤ 10 zu Gew.-%, bevorzugt jedoch in Mengen von ≤ 5 Gew.-%, jeweils bezogen auf die Gesamtmenge an Monomeren A2, eingesetzt. Insbesondere bevorzugt werden jedoch keinerlei derartige vernetzende Monomeren A2 zu Herstellung des Polymers A eingesetzt.

Erfindungsgemäß vorteilhaft beträgt der einpolymerisierte Anteil an Monomeren A2 im Polymer A ≤ 10 Gew.-% oder ≤ 5 Gew.-%.

Insbesondere vorteilhaft enthält das Polymer A keinerlei Monomeren A2 einpolymerisiert.

Bevorzugte Polymere A sind erhältlich durch radikalisch initiierte Lösungspolymerisation lediglich von Monomeren A1, besonders bevorzugt von 65 bis 100 Gew.-%, ganz besonders bevorzugt von 70 bis 90 Gew.-% Acrylsäure mit besonders bevorzugt 0 bis 35 Gew.-%, ganz besonders bevorzugt 10 bis 30 Gew.-% Maleinsäure oder Maleinsäureanhydrid.

Vorteilhaft weist Polymer A ein gewichtsmittleres Molekulargewicht Mw im Bereich von 1000 g/mol bis 500000 g/mol, bevorzugt 10000 g/mol bis 300000 g/mol, besonders bevorzugt 30000 g/mol bis 120000 g/mol auf.

Die Einstellung des gewichtsmittleren Molekulargewichts Mw bei der Herstellung von Polymer A ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts Mw ist dem Fachmann geläufig und erfolgt beispielsweise mittels Gelpermeationschromatograpie.

Gut geeignete Handelsprodukte für Polymere A sind zum Beispiel die Sokalan®-Produkte der BASF SE, welche beispielsweise basieren auf Acrylsäure und/oder Maleinsäure.

Gegebenenfalls enthält die Komponente (I) einen niedermolekularen Vernetzer (ii) mit mindestens zwei funktionellen Gruppen welche ausgewählt sind aus der Gruppe Hydroxy, Carbonsäure und deren Derivate, primäres, sekundäres und tertiäres Amin, Epoxy, Aldehyd.

Gut geeignete derartige Vernetzer sind solche mit einem Molekulargewicht im Bereich von 30 bis 500 g/mol. Beispielhaft seien genannt: Alkanolamine, wie Triethanolamin; Carbonsäuren, wie Zitronensäure, Weinsäure, Butanteracarbonsäure; Alkohole, wie Glucose, Glycerin, Glycol; Epoxide, wie Bisphenol-A oder Bisphenol-F.

Polymer M ist aus folgenden Monomeren aufgebaut:
a) 0 bis 50 Gew.-% wenigstens eines ethylenisch ungesättigten Monomeren, welches wenigstens eine Epoxid- und/oder wenigstens eine Hydroxyalkylgruppe enthält (Monomer(e) M1), und
b) 50 bis 100 Gew.-% wenigstens eines weiteren ethylenisch ungesättigten Monomeren, welches sich von den Monomeren M1 unterscheidet (Monomer(e) M2).

Polymer M ist durch radikalisch initiierte Emulsionspolymerisation in einem wässrigen Medium der entsprechenden Monomeren M1 und/oder M2 erhältlich. Polymer M kann einphasig oder mehrphasig vorliegen, kann einen Kern/Schale-Aufbau haben.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt (siehe zum Beispiel: Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)).

Die radikalisch initiierte wässrige Emulsionspolymerisationsreaktionen erfolgen üblicherweise so, dass man die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert.

Als Monomer(e) M1 kommen insbesondere Glycidylacrylat und/oder Glycidylmethacrylat sowie Hydroxyalkylacrylate und -methacrylate mit C2- bis C10-Hydroxyalkylgruppen, insbesondere C2- bis C4-Hydroxyalkylgruppen und bevorzugt C2- und C3-Hydroxyalkylgruppen in Betracht, zum Beispiel 2-Hydroxyethylacrylat, 2-Hydroxyethylmethacrylat, 3-Hydroxypropylacrylat, 3-Hydroxypropylmethacrylat, 4-Hydroxybutylacrylat und/oder 4-Hydroxybutylmethacrylat. Mit besonderem Vorteil werden eines oder mehrere, vorzugsweise eines oder zwei, der folgenden Monomere M1 eingesetzt: 2-Hydroxyethylacrylat, 2-Hydroxyethylmethacrylat, Glycidylacrylat, Glycidylmethacrylat.

Erfindungsgemäß ist es möglich, gegebenenfalls eine Teil- oder die Gesamtmenge an Monomeren M1 im Polymerisationsgefäß vorzulegen. Es ist aber auch möglich, die Gesamtmenge oder die gegebenenfalls verbliebene Restmenge an Monomeren M1 während der Polymerisationsreaktion zuzudosieren. Die Gesamtmenge oder die gegebenenfalls verbliebene Restmenge an Monomeren M1 kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M1 während der Polymerisationsreaktion kontinuierlich mit gleichbleibenden Mengenströmen, insbesondere als Bestandteil einer wässrigen Monomerenemulsion.

Als Monomer(e) M2 kommen insbesondere in einfacher Weise mit Monomer(en) M1 radikalisch copolymerisierbare ethylenisch ungesättigte Verbindungen in Betracht, beispielsweise Ethylen; vinylaromatische Monomere, wie Styrol, α-Methylstyrol, o-Chlorstyrol oder Vinyltoluole; Vinylhalogenide, wie Vinylchlorid oder Vinylidenchlorid; Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat; Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, -octyl-, - nonyl-, -decyl- und -2-ethylhexylester, Fumar- und Maleinsäuredimethylester oder -din-butylester; Nitrile α,β-monoethylenisch ungesättigter Carbonsäuren, wie Acrylnitril, Methacrylnitril, Fumarsäuredinitril, Maleinsäuredinitril sowie C4-8-konjugierte Diene, wie 1,3-Butadien (Butadien) und Isopren. Die genannten Monomere bilden in der Regel die Hauptmonomeren, die, bezogen auf die Gesamtmenge an Monomeren M2, einen Anteil von ≥ 50 Gew.-%, bevorzugt ≥ 80 Gew.-% und insbesondere ≥ 90 Gew.-% auf sich vereinen. In aller Regel weisen diese Monomeren in Wasser bei Normalbedingungen (20 °C, 1 atm (absolut)) lediglich eine mäßige bis geringe Löslichkeit auf.

Monomere M2, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien 3 bis 6 C-Atome aufweisende α,β-monoethylenisch ungesättigte Mono- und Dicarbonsäuren und deren Amide, wie z. B. Acrylsäure, Methacrylsäure, Maleinsäure, Fumarsäure, Itaconsäure, Acrylamid und Methacrylamid; ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethyl-amino)ethylmethacrylat, 2-(N-tert.-Butylamino)ethylmethacrylat, N-(3-N',N'-Dimethylaminopropyl)methacrylamid, 2-(1-Imidazolin-2-onyl)ethylmethacrylat und Ureidomethacrylat. Im Normalfall sind die vorgenannten wasserlöslichen Monomeren M2 lediglich als modifizierende Monomere in Mengen von ≤ 10 Gew.-%, bevorzugt ≤ 5 Gew.-% und insbesondere bevorzugt ≤ 3 Gew.-%, bezogen auf die Gesamtmenge an Monomeren M2, enthalten.

Monomere M2, die üblicherweise die innere Festigkeit der Verfilmungen einer Polymermatrix erhöhen, weisen normalerweise wenigstens eine N-Methylol- oder Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang auch von Bedeutung sind Verbindungen, wie Diacetonacrylamid und Acetylacetoxyethylacrylat bzw. -methacrylat. Häufig werden die vorgenannten vernetzenden Monomeren M2 in Mengen von ≤ 10 zu Gew.-%, bevorzugt in Mengen von ≤ 5 Gew.-% und insbesondere bevorzugt in Mengen von ≤ 3 Gew.-%, jeweils bezogen auf die Gesamtmenge an Monomeren A2, eingesetzt. Häufig werden jedoch keinerlei derartige vernetzende Monomeren M2 verwendet.

Erfindungsgemäß ist es möglich, gegebenenfalls eine Teil- oder die Gesamtmenge an Monomeren M2 im Polymerisationsgefäß vorzulegen. Es ist aber auch möglich, die Gesamtmenge oder die gegebenenfalls verbliebene Restmenge an Monomeren M2 während der Polymerisationsreaktion zuzudosieren. Die Gesamtmenge oder die gegebenenfalls verbliebene Restmenge an Monomeren M2 kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Monomeren M2 während der Polymerisationsreaktion kontinuierlich mit gleichbleibenden Mengenströmen, insbesondere als Bestandteil einer wässrigen Monomerenemulsion.

Zur Herstellung der wässrigen Dispersion der Komponente (II) werden häufig Dispergierhilfsmittel mitverwendet, die sowohl die Monomerentröpfchen als auch die durch die radikalisch initiierte Polymerisation erhaltenen Polymerteilchen in der wässrigen Phase dispers verteilt halten und so die Stabilität der erzeugten wässrigen Polymerzusammensetzung gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961.

Selbstverständlich können auch Gemische aus Emulgatoren und/oder Schutzkolloiden verwendet werden. Häufig werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind.

Gebräuchliche Emulgatoren sind z. B. ethoxilierte Mono-, Di- und Tri-Alkylphenole (EO-Grad: 3 bis 50, Alkylrest: C₄ bis C₁₂), ethoxilierte Fettalkohole (EO-Grad: 3 bis 50; Alkylrest: C₈ bis C₃₆) sowie Alkalimetall- und Ammoniumsalze von Alkylsulfaten (Alkylrest: C₈ bis C₁₂), von Schwefelsäurehalbestern ethoxylierter Alkanole (EO-Grad: 3 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Bevorzugt werden für das erfindungsgemäße Verfahren nichtionische und/oder anionische Emulgatoren verwendet.

In der Regel beträgt die Menge an eingesetztem Dispergierhilfsmittel, insbesondere Emulgatoren, 0,1 bis 5 Gew.-%, bevorzugt 1 bis 3 Gew.-%, jeweils bezogen auf die Gesamtmenge des Monomerengemisches M.

Erfindungsgemäß ist es möglich, gegebenenfalls eine Teil- oder die Gesamtmenge an Dispergierhilfsmittel im Polymerisationsgefäß vorzulegen. Es ist aber auch möglich, die Gesamtmenge oder die gegebenenfalls verbliebene Restmenge an Dispergierhilfsmittel während der Polymerisationsreaktion zuzudosieren. Die Gesamtmenge oder die gegebenenfalls verbliebene Restmenge an Dispergierhilfsmittel kann dem Polymerisationsgefäß dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung der Dispergierhilfsmittel während der Polymerisationsreaktion kontinuierlich mit gleichbleibenden Mengenströmen, insbesondere als Bestandteil einer wässrigen Monomerenemulsion.

Bevorzugte Polymere M enthalten a) 0,01 bis 50 Gew.-% wenigstens eines ethylenisch ungesättigten Monomeren, welches wenigstens eine Epoxid- und/oder wenigstens eine Hydroxyalkylgruppe enthält (Monomer(e) M1) und b) 50 bis 99,99 Gew.-% wenigstens eines weiteren ethylenisch ungesättigten Monomeren, welches sich von den Monomeren M1 unterscheidet (Monomer(e) M2).

Besonders bevorzugte derartige Polymere M sind erhältlich durch radikalisch initiierte Lösungspolymersiation von 10 bis 30 Gew.-%, vorzugsweise 15 bis 22 Gew.-% Acrylsäure- und/oder Methacrylsäureestern mit C1-8-Alkoholen - vorzugsweise Methanol, n-Butanol, 2-Ethylhexanol - mit 40 bis 70 Gew.-%, vorzugsweise 55 bis 65 Gew.-% Styrol und von 5 bis 50 Gew.-%, vorzugsweise 20 bis 30 Gew.-% 2-Hydroxyethylacrylat und/oder 2-Hydroxyethylmethacrylat und/oder Glycidylacrylat und/oder Glycidylmethacrylat, wobei die Summe der Komponenten 100 Gew.-% ergibt.

Weitere bevorzugte Polymere M enthalten kein(e) Monomer(e) M1 und sind erhältlich durch radikalisch initiierte Lösungspolymersiation von 80 bis 99 Gew.-%, vorzugsweise 85 bis 95 Gew.-% Acrylsäureestern und/oder Methacrylsäureestern mit C1-8-Alkoholen - vorzugsweise Methanol, n-Butanol, 2-Ethylhexanol - mit 0 bis 5 Gew.-%, vorzugsweise 1 bis 3 Gew.-% Ureidomethacrylat und von 0,5 bis 5 Gew.-%, vorzugsweise 1 bis 4 Gew.-% 3 bis 6 C-Atome aufweisende α,β-monoethylenisch ungesättigte Mono- und Dicarbonsäuren - vorzugsweise Acrylsäure, Methacrylsäure - und/oder Amiden dieser Säuren, wobei die Summe der Komponenten 100 Gew.-% ergibt.

Bevorzugt haben derartige Polymere einen Kern/Schale-Aufbau (isotrope Verteilung der Phasen, zum Beispiel zwiebelschalenförmig) oder einen Janus-Aufbau (anisotrope Verteilung der Phasen).

Durch gezielte Variation von Art und Menge der Monomeren M1 und M2 ist es dem Fachmann erfindungsgemäß möglich, wässrige Polymerzusammensetzungen herzustellen, deren Polymere M eine Glasübergangstemperatur T_{g} bzw. einen Schmelzpunkt im Bereich von -60 bis 270 °C aufweisen.

Vorteilhaft liegt die Glasübergangstemperatur T_{g} des Polymeren M im Bereich von 10°C bis 120 °C und bevorzugt im Bereich von 30 °C bis 90 °C.

Mit der Glasübergangstemperatur T_{g}, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Die T_{g}-Werte für die Homopolymerisate der meisten Monomeren sind bekannt und z. B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die erfindungsgemäßen Komponenten (I) und (II) weisen üblicherweise Polymerfeststoffgehalte (Gesamtmenge an Polymer A oder Gesamtmenge an Polymer M) von ≥ 10 und ≤ 70 Gew.-%, häufig ≥ 20 und ≤ 65 Gew.-% und oft ≥ 40 und ≤ 60 Gew.-%, bezogen auf die jeweilige wässrige Komponente (I) oder (II), auf.

Der über quasielastische Lichtstreuung (ISO-Norm 13321) ermittelte zahlenmittlere Teilchendurchmesser (cumulant z-average) des Polymeres M in der der wässrigen Komponente (II) liegt in der Regel zwischen 10 und 2000 nm, häufig zwischen 20 und 1000 nm und oft zwischen 50 und 700 nm bzw. 80 bis 400 nm.

Das Gewichtsverhältnis des Polymers A : Polymer M liegt im Bereich von 1 : 10 bis 10 : 1, vorzugsweise im Bereich von 3 :1 bis 1 : 3 besonders bevorzugt im Bereich von 3 : 2 bis 2 : 3. Die Gewichtsangaben beziehen sich jeweils auf die reinen, unverdünnten Substanzen, bzw. auf den Feststoff.

Der pH-Wert des Bindemittels (b) liegt im Bereich von 0 bis 4 vorzugsweise im Bereich von 1,5 bis 3. Der gewünschte pH-Wert des Bindemittels B stellt sich in der Regel durch die Kombination der Komponenten (I) und (II) und gegebenenfalls Komponente (III) ein.

Der pH-Wert des Bindemittels (b) am Ort der Wirkung kann aber in üblicher Weise durch Zugabe von anorganischen oder organischen Säuren, zum Beispiel Mineralsäuren wie Schwefelsäure, Salzsäure, organische Sulfonsäuren, Carbonsäuren wie Ameisensäure oder Essigsäure oder anorganischen oder organischen Basen, zum Beispiel Natriumhydoxyd (wässrig oder in Substanz), Calciumoxid oder Calciumcarbonat (jeweils wässrig oder in Substanz) oder Ammoniak, wässrig oder als Substanz auf den gewünschten Wert im Bereich von 0 bis 4 vorzugsweise im Bereich von 1,5 bis 3 eingestellt werden.

Im allgemeinen kann das fertig gemischte Bindemittel (b) mit den oben genannten pH-Wertbereichen eingesetzt werden. Der gewünschte pH-Wert - wie oben beschrieben - kann aber auch eingestellt werden, indem man die einzelnen Komponenten des Bindemittels (b) und die oben beschriebenen Säuren oder Basen getrennt auf das lignocellulosehaltige Substrat aufbringt. Der Fachmann kann durch Wahl der pH-Werte der Komponenten des Bindemittels (b) und der zugegebenen Säuren oder Basen diese so kombinieren, daß sich der gewünschte pH-Wert auf dem lignocellulosehaltigen Substrat einstellt.

Unter dem Begriff Additiv als Komponente (III) sind alle dem Fachmann bekannten Additive zu verstehen, beispielsweise Wachse, Parafflnemulsion, flammhemmende Additive, Netzmittel, Salze, aber auch anorganische oder organische Säuren und Basen, zum Beispiel Mineralsäuren wie Schwefelsäure, Salpetersäure, organische Sulfonsäuren, Carbonsäuren wie Ameisensäure oder Essigsäure oder anorganischen oder organischen Basen, zum Beispiel Natriumhydoxyd (wässrig oder in Substanz), Calciumoxid oder Calciumcarbonat (jeweils wässrig oder in Substanz) oder Ammoniak, wässrig oder als Substanz. Diese Additive können in einer Menge von 0 bis 20 Gew.-%, bevorzugt 0 bis 5 Gew.-%, insbesondere 0 bis 1 Gew.-%, bezogen auf die Trockenmasse der lignocellulosehaltigen Partikel, zum Beispiel absolut trockenes (atro) Holz, zugefügt werden.

Die lignocellulosehaltigen Partikel, vorzugsweise Holzpartikel, besonders bevorzugt Holzspäne- oder fasern, werden in der Regel durch in Berührung bringen mit dem Bindemittel (a) oder (b) beleimt. Derartige, sogenannte Beleimungs-Verfahren sind für die Herstellung von konventionellen Holzwerkstoffen mit üblichen Aminoplast-Harzen bekannt und beispielsweise in " Taschenbuch der Spanplatten Technik" H.-J. Deppe, K. Ernst, 4. Aufl., 2000, DRW - Verlag Weinbrenner GmbH & Co., Leinfelden-Echterdingen, Kapitel 3.3 beschrieben.

Das Bindemittel (a) oder (b) kann auf verschiedene Arten mit den lignocellulosehaltigen Partikel, vorzugsweise Holzpartikel, besonders bevorzugt Holzspäne -oder fasern, in Berührung gebracht werden, bevorzugt durch Aufsprühen von (a) oder (b) auf die lignocellulosehaltigen Partikel.

Bei der Beleimung wird üblicherweise das Bindemittel (a) oder (b) in solchen Menge eingesetzt, dass, bezogen auf die Trockenmasse der lignocellulosehaltigen Partikel, zum Beispiel absolut trockenes (atro) Holz, 0,1 bis 50 Gew.-%, bevorzugt 0,1 bis 30 Gew.-%, besonders bevorzugt 0,5 bis 15 Gew.-% und insbesondere 3 bis 10 Gew.-% Bindemittel, bezogen auf das reine, unverdünnte Bindemittel verwendet werden.

Für den Fall, daß das Bindemittel (a) ein, wie oben beschriebenes, Formaldehydharz enthält, enthält das Bindemittel (b) einen Formaldehydfänger.

Damit sind chemische Substanzen gemeint, die in der Regel ein freies Elektronenpaar haben, welches mit dem Formaldehyd chemisch reagiert, also den Formaldehyd chemisch, in der Regel praktisch irreversibel, bindet. Derartige freie Elektronenpaare finden sich beispielsweise auf folgenden funktionellen Gruppen organischer oder anorganischer Verbindungen: primäre, sekundäre und tertiäre Aminogruppe, Hydroxylgruppe, Sulfitgruppe, Amide, Imide.

Gut geeignete Formaldehydfänger sind zum Beispiel: Ammoniak, Harnstoff, Melamin, organische C₁-C₁₀-Amine, Polymere die mindestens eine Aminogruppe tragen, wie Polyamine, Polyimine, Polyharnstoffe, Poly-Lysine, Polyvinylamin, Polyethylenimin.

Der Anteil des Formaldehydfängers im Bindemittel (b) liegt im Bereich von 0,1 bis 10 Gew.-%, vorzugsweise 0,5 bis 7 Gew.-%, bezogen auf bezogen auf die Trockenmasse der lignocellulosehaltigen Partikel, zum Beispiel absolut trockenes (atro) Holz, und reinen, unverdünnten Formaldehydfänger.

Die mehrschichtigen lignocellulosehaltigen Formkörper können eine regelmäßige oder unregelmäßige Raumform einnehmen. Als gewünschte Formen kommen die folgenden beispielhaft in Frage: alle regelmäßigen Formkörper, wie Kugel, Zylinder, Quader, Platten; alle unregelmäßigen Formen wie unregelmäßige Hohlräume, Ornamente.

Bevorzugte gewünschte Formen sind flächig, besonders bevorzugt ist die Form einer Platte.

Weiter bevorzugte mehrschichtige lignocellulosehaltige Formkörper enthalten mehr als 90 Gew.-% Holz-Partikel als lignocellulosehaltige Partikel.

Weiter bevorzugte mehrschichtige lignocellulosehaltige Formkörper enthalten mehr als 90 Gew.-% Holz-Fasern oder Holz-Späne als lignocellulosehaltige Partikel.

Die durchschnittliche Dichte der mehrschichtigen lignocellulosehaltigen Formkörper liegt üblicherweise im Bereich von 300 kg/m³ bis 950 kg/m³, vorzugsweise von 450 kg/m³ bis 850 kg/m³.

Die erfindungsgemäßen mehrschichtigen lignocellulosehaltigen Formkörper haben eine Mittelschicht oder mehrere Mittelschichten A), enthaltend lignocellulosehaltige Partikel und ein Bindemittel (a) und eine Deckschicht oder zwei Deckschichten B) enthaltend lignocellulosehaltige Partikel und ein Bindemittel (b).

Mittelschicht oder Mittelschichten im Sinne der Erfindung sind alle Schichten, die nicht die äußeren Schichten sind.

Die äußere Schicht oder die äußeren Schichten der erfindungsgemäßen mehrschichtigen lignocellulosehaltigen Formkörper werden hier auch Deckschicht oder Deckschichten genannt.

Bevorzugte erfindungsgemäße mehrschichtige lignocellulosehaltigen Formkörper sind flächig, bevorzugt in Form einer Platte, enthalten Holz-Partikel, besonders bevorzugt Holzspäne oder Holzfasern als lignocellulosehaltige Partikel und haben drei Schichten: eine Mittelschicht A) und auf deren Ober- und Unterseite jeweils eine Deckschicht B).

Zur Herstellung der mehrschichtigen lignocellulosehaltigen Formkörper, beispielsweise der oben genannten, dreischichtigen lignocellulosehaltigen Formkörper, werden vorzugsweise die folgenden Bindemittel für die jeweiligen Schichten verwendet:
In einer gut geeigneten Ausführungsform enthält das Bindemittel (b) keinen niedermolekularen Vernetzer (ii), jedoch eine Komponente (II), wie beispielshaft im folgenden unter Variante 1, Variante 2 und Variante 3 beschrieben.

### Variante 1:

Für die Mittelschicht A) oder die Mittelschichten A) enthält das Bindemittel (a) lediglich die Komponente (a1), vorzugsweise ein Aminoplastharz, besonders bevorzugt ein UF-Harz und/oder MUF-Harz.

Für eine Deckschicht B) oder die beiden Deckschichten B) wird das Bindemittel (b) verwendet; beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält keine weitere Vernetzerkomponente. Die Komponente (II) des Bindemittels (b) ist eine wässrige Dispersion eines erfindungsgemäßen Polymeren M, erhältlich durch radikalisch initiierte Emulsions-Polymerisation in Wasser von 50 bis 65 Gew.-% Styrol und 5 bis 15 Gew.-% Methylmethacrylat, 5 bis 15 Gew.-% n-Butylacrylat, 10 bis 30 Gew.-% Hydroxyethylacrylat und 2 bis 20 Gew.-% Glycidylmethacrylat, wobei die Summe der Monomeren 100 Gew.-% ergibt.

Das Bindemittel (b) enthält weiterhin einen, wie oben definierten Formaldehydfänger, in den wie dort definierten Mengen.

### Variante 2:

Für die Mittelschicht A) oder die Mittelschichten A) enthält das Bindemittel (a) die Komponente (a1), vorzugsweise ein Aminoplast, besonders bevorzugt ein UF-Harz und/oder MUF-Harz und die Komponente (a2), bevorzugt PMDI in den oben für die Kombination (a1) und (a2) definierten Mengen.

Für eine Deckschicht B) oder die beiden Deckschichten B) wird das Bindemittel (b) verwendet; beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält keine weitere Vernetzerkomponente. Die Komponente (II) des Bindemittels (b) ist eine wässrige Dispersion eines erfindungsgemäßen Polymeren M, erhältlich durch radikalisch initiierte Emulsions-Polymerisation in Wasser von 50 bis 65 Gew.-% Styrol und 5 bis 15 Gew.-% Methylmethacrylat, 5 bis 15 Gew.-% n-Butylacrylat, 10 bis 30 Gew.-% Hydroxyethylacrylat und 2 bis 20 Gew.-% Glycidylmethacrylat, wobei die Summe der Monomeren 100 Gew.-% ergibt.

Das Bindemittel (b) enthält weiterhin einen, wie oben definierten Formaldehydfänger, in den wie dort definierten Mengen.

### Variante 3:

Für die Mittelschicht A) oder die Mittelschichten A) enthält das Bindemittel (a) lediglich die Komponente (a2), bevorzugt PMDI.

Für eine Deckschicht B) oder die beiden Deckschichten B) wird das Bindemittel (b) verwendet; beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält keine weitere Vernetzerkomponente. Die Komponente (II) des Bindemittels (b) ist eine wässrige Dispersion eines erfindungsgemäßen Polymeren M, erhältlich durch radikalisch initiierte Emulsions-Polymerisation in Wasser von 50 bis 65 Gew.-% Styrol und 5 bis 15 Gew.-% Methylmethacrylat, 5 bis 15 Gew.-% n-Butylacrylat, 10 bis 30 Gew.-% Hydroxyethylacrylat und 2 bis 20 Gew.-% Glycidylmethacrylat, wobei die Summe der Monomeren 100 Gew.-% ergibt.

In einer weiteren gut geeigneten Ausführungsform enthält das Bindemittel (b) einen niedermolekularen Vernetzer (ii) und keine Komponente (II), wie beispielshaft im folgenden unter Variante 4 und Variante 5 beschrieben.

### Variante 4:

Für die Mittelschicht A) oder die Mittelschichten A) enthält das Bindemittel (a) lediglich die Komponente (a1), vorzugsweise ein Aminoplastharz, besonders bevorzugt ein UF-Harz und/oder MUF-Harz.

Für eine Deckschicht B) oder die beiden Deckschichten B) wird das Bindemittel (b) verwendet; beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält zusätzlich eine Vernetzerkomponente (ii), vorzugsweise mit mehr als zwei funktionellen Gruppen pro Vernetzermolekül, besonders bevorzugt Triethanolamin.

Das Bindemittel (b) enthält weiterhin einen, wie oben definierten Formaldehydfänger, in den wie dort definierten Mengen.

### Variante 5:

Für die Mittelschicht A) oder die Mittelschichten A) enthält das Bindemittel (a) lediglich die Komponente (a2), bevorzugt PMDI.

Für eine Deckschicht B) oder die beiden Deckschichten B) wird das Bindemittel (b) verwendet; beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält zusätzlich eine Vernetzerkomponente (ii), vorzugsweise mit mehr als zwei funktionellen Gruppen pro Vernetzermolekül, besonders bevorzugt Triethanolamin.

In einer weiteren gut geeigneten Ausführungsform enthält das Bindemittel (b) sowohl einen niedermolekularen Vernetzer (ii) als auch eine Komponente (II), wie beispielshaft im folgenden unter Variante 6 beschrieben.

### Variante 6:

Für die Mittelschicht A) oder die Mittelschichten A) enthält das Bindemittel (a) die Komponente (a1), vorzugsweise ein Aminoplast, besonders bevorzugt ein UF-Harz und/oder MUF-Harz und/oder die Komponente (a2), bevorzugt PMDI in den oben für die Kombination (a1) und (a2) definierten Mengen.

Für eine Deckschicht B) oder die beiden Deckschichten B) wird das Bindemittel (b) verwendet; beispielsweise enthält das Bindemittel (b) eine wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthält zusätzlich eine Vernetzerkomponente (ii)), vorzugsweise mit mehr als zwei funktionellen Gruppen pro Vernetzermolekül, besonders bevorzugt Triethanolamin. Die Komponente (II) des Bindemittels (b) ist eine wässrige Dispersion eines erfindungsgemäßen Polymeren M, erhältlich durch radikalisch initiierte Emulsions-Polymerisation in Wasser von 50 bis 65 Gew.-% Styrol und 5 bis 15 Gew.-% Methylmethacrylat, 5 bis 15 Gew.-% n-Butylacrylat, 10 bis 30 Gew.-% Hydroxyethylacrylat und 2 bis 20 Gew.-% Glycidylmethacrylat, wobei die Summe der Monomeren 100 Gew.-% ergibt.

Das Bindemittel (b) enthält weiterhin einen, wie oben definierten Formaldehydfänger, in den wie dort definierten Mengen.

Die Dicke der erfindungsgemäßen mehrschichtigen lignocellulosehaltigen Formkörper, vorzugsweise der plattenförmigen Formkörper, variiert mit dem Anwendungsgebiet und liegt in der Regel im Bereich von 0,5 bis 300 mm, vorzugsweise im Bereich von 10 bis 200 mm, insbesondere 12 bis 100 mm.

Die Dickenverhältnisse der Schichten der erfindungsgemäßen mehrschichtigen lignocellulosehaltigen Formkörper, vorzugsweise der plattenförmigen Formkörper, sind variabel. Üblicherweise sind die äußeren Schichten A), auch Deckschichten genannt, für sich genommen oder auch in Summe dünner als die Schicht oder Schichten der Mittelschicht(en) B).

Die Masse einer einzelnen Deckschicht liegt üblicherweise im Bereich von 5 bis 30 Gew.-%, vorzugsweise 10 bis 25 Gew.-% der Gesamtmasse des erfindungsgemä-βen mehrschichtigen lignocellulosehaltigen Formkörpers.

Im bevorzugten erfindungsgemäßen mehrschichtigen lignocellulosehaltigen Formkörper, vorzugsweise der plattenförmigen Formkörper, liegt die Dicke der mittleren Schicht(en) B), bezogen auf die Gesamtdicke des erfindungsgemäßen mehrschichtigen lignocellulosehaltigen Formkörpers, vorzugsweise des plattenförmigen Formkörpers, im Bereich von 20 % bis 99 %, vorzugsweise 50 % bis 99 %, besonders bevorzugt 60 % bis 99 %.

Die Herstellung der erfindungsgemäße mehrschichtige lignocellulosehaltigen Formkörper, vorzugsweise jener in welchen die lignocellulosehaltigen Partikel Holzpartikel sind, besonders bevorzugt Holzspäne- oder fasern, geschieht in der üblichen Art, wie in "Taschenbuch der Spanplatten Technik" H.-J. Deppe, K. Ernst, 4. Aufl., 2000, DRW - Verlag Weinbrenner GmbH&Co., Leinfelden-Echterdingen, Kapitel 3.5 beschrieben.

Üblicherweise werden zunächst lignocellulosehaltigen Partikel, für die Mittelschicht(en) A) und die Deckschicht(en) B), vorzugsweise Holz, zum Beispiel in Form von Fasern, Spänen, Furnieren oder Strands, wie oben beschrieben mit dem jeweiligen Bindemittel (a) (für die Mittelschicht(en) A)) oder (b) (für die Deckschicht(en) B)) in Berührung gebracht (auch "beleimt" genannt).

Dann werden die so beleimten lignocellulosehaltigen Partikel, vorzugsweise Holz, zum Beispiel in Form von Fasern, Spänen, Furnieren oder Strands, gemäß der gewünschten Reihenfolge des herzustellenden mehrschichtigen lignocellulosehaltigen Formkörpers übereinandergeschichtet und nach einem üblichen Verfahren zu mehrschichtigen lignocellulosehaltigen Formkörpern, vorzugsweise solchen in welchen die lignocellulosehaltigen Partikel, Holz, zum Beispiel in Form von Fasern, Spänen, Furnieren oder Strands sind, bei erhöhter Temperatur verpresst.

Hierzu werden üblicherweise durch Aufstreuen der so beleimten lignocellulosehaltigen Partikel, - vorzugsweise Holz, besonders bevorzugt Holz in Form von Spänen oder Fasern - auf einen Träger eine Faser- / Spänematte erzeugt und diese wird üblicherweise bei Temperaturen von 80 °C bis 250 °C und bei Drücken von 5 bis 50 bar zu erfindungemäßen mehrschichtigen lignocellulosehaltigen Formkörpern verpresst (siehe zum Beispiel: " Taschenbuch der Spanplatten Technik" H.-J. Deppe, K. Ernst, 4. Aufl., 2000, DRW - Verlag Weinbrenner GmbH & Co., Leinfelden-Echterdingen, Seite 232 - 254. "MDF - Mitteldichte Faserplatten" H.-J. Deppe, K. Ernst, 1996, DRW - Verlag Weinbrenner GmbH&Co., Leinfelden-Echterdingen, Seite 93 - 104).

Die benötigten Presszeiten zur Plattenherstellung werden üblicherweise in "Sekunden pro mm Plattendicke" bzw. s/mm angegeben (oft auch als Presszeitfaktor bezeichnet). Für erfindungsgemässe mehrschichtige lignocellulosehaltige Formkörper werden in der Regel Presszeitfaktoren benötigt, wie sie für die schnellen Formaldehydharze bekannt sind: auf einer Siempelkamp Laborpresse (Ausmasse 520*520*mm²) werden in der Regel für erfindungsgemässe Formkörper Presszeitfaktoren von 8 bis 10 s/mm benötigt, ebenso wie für Platten, welche nur mit aminoplasthaltigen Bindern hergestellt werden; Formkörper hergestellt mit formaldehydfreien Bindemitteln, beispielsweise Produkte der Acrodur® Produktpalette der BASF SE, benötigen Presszeitfaktoren von mehr als 25 s/mm.

Als besonders bevorzugte erfindungsgemäße mehrschichtige lignocellulosehaltige Formkörper kommen alle in Betracht, die aus Holzstreifen gefertigt sind, beispielsweise Furnierplatten oder Sperrholzplatten oder aus Holzspänen hergestellte mehrschichtige lignocellulosehaltige Formkörper, beispielsweise Spanplatten oder OSB-Platten, sowie mehrschichtige Holzfaserwerkstoffe wie LDF-, MDF- und HDF-Platten.

Vorteilhaft werden nach dem erfindungsgemäßen Verfahren formaldehydfreie Bindemittel enthaltende Holzwerkstoffe hergestellt. Bevorzugt sind mehrschichtige OSB-, Holzfaser- und Spanplatten.

Ferner betrifft die vorliegende Erfindung die Verwendung der erfindungsgemäßen mehrschichtigen lignocellulosehaltigen Formkörper, bevorzugt der erfindungsgemäßen mehrschichtigen holzhaltigen Formkörper zur Herstellung von Möbeln, von Verpackungsmaterialien, im Hausbau, im Trockenausbau oder im Innenausbau, beispielsweise als Laminat, Dämmstoff, Wand- oder Deckenelement, oder auch in Kraftfahrzeugen.

Die erfindungsgemäßen mehrschichtigen lignocellulosehaltigen Formkörper zeigen, im Vergleich mit nicht-erfindungsgemäßen, in allen Schichten Formaldehydharz enthaltenden mehrschichtigen lignocellulosehaltigen Formkörpern, eine stark reduzierte Emission von Formaldehyd oder praktisch keine Emission von Formaldehyd.

Die Formaldehydemissionen wurden zum Beispiel mit folgenden Methoden nach Prüfverfahren für Holzwerkstoffe (Bundesgesetzblatt 10/91, S. 488/489) gemessen: CEN prEN 717-1 ("Exsiccator"); DIN EN 120 ("Perforatorwert"); DIN 52368 (entsprechend CEN prEN 717-2; Gasanalyse oder Kubikmeterkammerwert).

Die erfindungsgemäßen mehrschichtigen lignocellulosehaltigen Formkörper zeigen außerdem eine erhöhte Abhebefestigkeit für die Deckschichten, ebenfalls im Vergleich zu mit nicht-efindungsgemäßen, in allen Schichten Formaldehydharz enthaltenden mehrschichtigen lignocellulosehaltigen Formkörpern.

### Beispiele

### 1. Komponenten (I) und (II)

Die Komponente (I) war eine handelsübliche wässrige Lösung eines erfindungsgemäßen Polymeren A, erhältlich durch radikalisch initiierte Lösungspolymerisation in Wasser von 70 Gew.-% Acrylsäure und 30 Gew.-% Maleinsäureanhydrid. Die Komponente (I) enthielt keine weitere Vernetzerkomponente, wie Multialkanolamine, zum Beispiel Triethanolamin. Das gewichtsmittlere Molekulargewicht Mw betrug 80.000 g/mol. Der Feststoffgehalt betrug 45 Gew.-%.

Die Komponente (II) war eine handelsübliche wässrige Dispersion eines erfindungsgemäßen Polymeren M, erhältlich durch radikalisch initiierte Emulsions-Polymerisation in Wasser von 59 Gew.-% Styrol und 12 Gew.-% Methylmethacrylat, 5 Gew.-% n-Butylacrylat, 16 Gew.-% Hydroxyethylacrylat und 8 Gew.-% Glycidylmethacrylat. Die Teilchengrösse betrug im Mittel 140 nm. Der pH-Wert war 1,9. Der Feststoffgehalt betrug 46 Gew.-%.

### 2. Liste der verwendeten Bindemittelzusammensetzungen

BM1: Unter 1. beschriebene Komponenten (I) und (II) in einer 1 : 1-Mischung (bezogen auf den jeweiligen Feststoffgehalt).
BM2: 9% atro UF-Leim, in diesem Fall KAURIT® KL 347 der BASF SE plus 4 Gew.-% (bezogen auf den Feststoffgehalt des Leims) Ammoniumnitrat-Härter
BM3: 9% atro UF-Leim, in diesem Fall KAURIT® KL 347 der BASF SE plus 1 Gew.-% (bezogen auf den Feststoffgehalt des Leims) Ammoniumnitrat-Härter.
BM4: Unter 1. beschriebene Komponente (I), jedoch mit Triethanolamin (30 Teile auf 100 Teile (I)) als Vernetzer (ii).
BM5: Lupranat® M20 FB, ein Isocyanat-basiertes Bindemittel der BASF SE.
BM6: Eine Mischung aus 100 Gewichtsteilen BM1 und 10 Gewichtsteilen Triethanolamin.

### 3. Meßmethoden und Meßergebnisse

Die Bestimmung der Formaldehydemission erfolgte mit folgenden Methoden nach Prüfverfahren für Holzwerkstoffe (Bundesgesetzblatt 10/91, S. 488/489):
CEN prEN 717-1 ("Exsiccator"); DIN EN 120 ("Perforatorwert"); DIN 52368 (entsprechend CEN prEN 717-2, Gasanalyse oder Kubikmeterkammerwert).

Die Methoden zur Prüfung der so hergestellten Formkörper sind:
Abhebefestigkeit (AF): EN311; Biegefestigkeit (BF) EN310; Querzugfestigkeit (QZ) EN319; Rohdichte EN323; Feuchtegehalt EN322; Dickenquellung (D24h) EN317 Mengenangaben in den Beispielen werden oft als "% atro" angegeben: diese Angaben beziehen sich als Gewichtsprozent dann immer auf die Menge des Feststoffes im Holz (atro = absolut trocken, oder im Englischen O.D. = oven dry). Dabei entspricht das eingesetzte Holz immer 100% atro. (Siehe auch Deppe und Ernst 2000, S. 32)

Die Ergebnisse sind in der Tabelle 2 zusammengestellt.

### 4. Herstellung und Prüfung der mehrschichtigen lignocellulosehaltigen Formkörper

### 4.1 Herstellung

Die in Tabelle 1 angegebene Menge Fichte-Späne (bei 20 °C, 65 % Luftfeuchte klimatisiert) wurden mit der entsprechenden Menge an wässrigem Bindemittel (siehe Tabelle 1, Spalte Feststoffgehalt Bindemittel; angegeben sind die Feststoffmengen des Bindemittels bezogen auf atro Holz) im Lödige-Mischer beleimt und die Feuchte gemessen. Anschließend wurden die Matten für die Mittelschicht und die Deckschichten gestreut und bei 200 °C mit einem Presszeitfaktor von 10 s/mm Plattendicke verpresst.

Die in den Versuchen hergestellten, dreischichtigen lignocellulosehaltigen Formkörper wurden auf die unter 3. angegebenen Eigenschaften mit den dort angegebenen Methoden geprüft

Die Ergebnisse dieser Prüfungen sind in Tabelle 2 dargestellt.

Die Versuche und Ergebnisse zeigen, dass die erfindungsgemäßen mehrschichtigen, lignocellulosehaltigen Formkörper eine, je nach Meßmethode, bis zu 10fach (Kubikmeterkammerwert-Methode; für Möbelanwendungen am Nähesten am Endprodukt) verminderte Formaldehydemission haben,siehe zum Beispiel Serie A.

Serie A zeigt den direkten Vergleich der herkömmlichen Referenz-Platte (Deckschicht und Mittelschicht mit UF-Harz) mit einer erfindungsgemäßen Platte. Die mechanischen Eigenschaften sind vergleichbar; die Abhebefestigkeit der erfindungsgemäßen Platte 1 (Spalte #) ist allerdings höher als die der Referenzplatte . Die Formaldehydemissionen der erfindungsgemäßen Platte 1 sind deutlich verringert.

Serie B zeigt die Abhängigkeit der Formaldehydemission vom Typ des Bindemittels in der Deckschicht (Platten 1, 4, und 5), sowie den Einfluss der Menge an Harnstoff in der Deckschicht (Platten 1, 2 und 3).
Der Harnstoff in der Deckschicht führt deutlich zu einer überraschend besseren Abhebefestigkeit (Anhaftung der Deckschicht auf der Mittelschicht).

Beide Effekte, nämlich Formaldehydreduktion und Verbeserung der Abhebefestigkeit die bereits in Serien A und B gezeigt wurden werden in Serie C, jetzt mit den entsprechenden Kubikmeterkammerwerten, noch einmal bestätigt (siehe Serie C, Platten 1 bis 3), wobei der Vergleich der Platte 4 in Serie B mit der Platte 4 in Serie C ebenso zeigt, dass Harnstoff zu einer überraschend besseren Abhebefestigkeit führt

Serie D verwendet ein anderes, nämlich formaldehydfreies, Mittelschichtbindemittel als die vorhergehenden Serien (siehe bevorzugte Variante 5). Es wurde bei der Herstellung der Platte 1 kein Trennmittel zwischen Deckschichtoberfläche (Plattenoberfläche) und Pressblech benötigt, welches sonst bei Isocyanathaltigen Bindemitteln die Anklebung auf dem Pressblech verhindert.

Serie E zeigt, dass es nicht möglich ist, alleine mit einem formaldehydfreien Bindemittel (b) welches in dieser Erfindung in der Deckschicht eingesetzt wird, eine Spanplatte bei niedrigen Presszeitfaktoren herzustellen. Erst bei doppelt so hohen Presszeitfaktoren (ab 25 s/mm), im Vergleich zu den erfindungsgemäßen Presszeitfaktoren, wird eine stabile Platte erhalten.

**Tabelle 1: Herstellparameter**

| Serie | # | Bindemittel | Schicht | Beleimung | Extra Harnstoff | Presszeitfaktor | Schichtdicke | kohdichte | Masse Holz | Feststoffgehalt Bindemittel | Spanfeuchte |
|---|---|---|---|---|---|---|---|---|---|---|---|
| | | | | *atro* | *atro* | *s*/*mm* | *mm* | *kg*/*m³* | *g* | *g* | *atro* |
| A | Ref | BM3 | DS | 9,00% | | 10 | 6,4 | 650 | 1125 | 101 | 6,90% |
| | | BM2 | MS | 9,00% | | | 9,6 | | 1687 | 152 | 6,00% |
| | 1 | BM1 | DS | 6,00% | 5,00% | | 6,4 | | 1125 | 67 | 10,20% |
| | | BM2 | MS | 9,00% | | | 9,6 | | 1687 | 152 | 6,70% |
| B | Ref | BM3 | DS | 9,0% | | | 6,4 | | 1125 | 101 | 6,9% |
| | | BM2 | MS | 9,0% | | | 9,6 | | 1687 | 152 | 6,0% |
| | 1 | BM1 | DS | 6,0% | 5,0% | | 6,4 | | 1125 | 68 | 10,2% |
| | | BM2 | MS | 9,0% | | | 9,6 | | 1687 | 152 | 6,0% |
| | 2 | BM1 | DS | 6,0% | 3,0% | | 6,4 | | 1125 | 68 | 7,3% |
| | | BM2 | MS | 9,0% | | | 9,6 | | 1687 | 152 | 6,0% |
| | 3 | BM1 | DS | 6,0% | 1,0% | | 6,4 | | 1125 | 68 | 9,8% |
| | | BM2 | MS | 9,0% | | | 9,6 | | 1687 | 152 | 6,0% |
| | 4 | BM4 | DS | 6,0% | 5,0% | | 6,4 | | 1125 | 68 | 7,7% |
| | | BM2 | MS | 9,0% | | | 9,6 | | 1687 | 152 | 5,7% |
| | 5 | BM6 | DS | 6,0% | 5,0% | | 6,4 | | 1125 | 68 | 7,7% |
| | | BM2 | MS | 9,0% | | | 9,6 | | 1687 | 152 | 5,7% |
| C | Ref | BM3 | DS | 9,0% | | | 6,4 | | 1125 | 101 | 6,9% |
| | | BM2 | MS | 9,0% | | | 9,6 | | 1687 | 152 | 6,0% |
| | 1 | BM1 | DS | 6,0% | | | 6,4 | | 1125 | 68 | 8,8% |
| | | BM2 | MS | 9,0% | | | 9,6 | | 1687 | 152 | 7,1% |
| | 2 | BM1 | DS | 6,0% | 1,0% | | 6,4 | | 1125 | 68 | 9,0% |
| | | BM2 | MS | 9,0% | | | 9,6 | | 1687 | 152 | 6,1% |

| Serie | # | Bindemittel | Schicht | beleimung | Extra Harnstoff | Presszeitfaktor | Schichtdicke | kohdichte | Masse Holz | Feststoffgehalt Bindemittel | Spanfeuchte |
|---|---|---|---|---|---|---|---|---|---|---|---|
| | | | | *atro* | *atro* | *s*/*mm* | *mm* | *kg*/*m³* | *g* | *g* | *atro* |
| C | 3 | BM1 | DS | 6,0% | 5,0% | 10 | 6,4 | 650 | 1125 | 68 | 9,4% |
| | | BM2 | MS | 9,0% | | | 9,6 | | 1687 | 152 | 7,0% |
| | 4 | BM4 | DS | 6,0% | | | 6,4 | | 1125 | 68 | 7,8% |
| | | BM2 | MS | 9,0% | | | 9,6 | | 1687 | 152 | 7,1% |
| D | Ref | BM5 | DS | 3,2% | | 14 | 6,4 | 680 | 1125 | 36 | |
| | | BM5 | MS | 3,5% | | | 9,6 | | 1687 | 59 | |
| | 1 | BM4 | DS | 6,0% | | | 6,4 | | 1125 | 68 | |
| | | BM5 | MS | 3,5% | | | 9,6 | | 1687 | 59 | |
| E | Ref | BM6 | DS | 6% | | | 6,4 | | 1125 | 68 | |
| | | BM6 | MS | 6% | | | 9,6 | | 1687 | 101 | |

| | | | | | | | | | | | |
|---|---|---|---|---|---|---|---|---|---|---|---|
| Verwendete Abkürzungen: DS: Deckschichten; MS: Mittelschicht #: Bezeichnung/Nummer der Platte | | | | | | | | | | | |

**Tabelle 2: Meßwerte**

| | | Deckschicht | | Mittelschicht | Mechanik | | Formaldehydemission | | |
|---|---|---|---|---|---|---|---|---|---|
| Serie | # | Bindemittel | Extra-Harnstoff | Bindemittel | Querzugfestigkeit | Abhebefestigkeit | Perforator | Exsiccator | m³-Kammer |
| | | | | | | | | | |
| | | | *atro* | | *N*/*mm²* | *N*/*mm²* | *mg*/*100g atro* | *mg*/*l* | *ppm* |
| A | Ref | BM3 | - | BM2 | 0,80 | 0,80 | 4,9 | 1,08 | 0,122 |
| | 1 | BM1 | 5% | BM2 | 0,78 | 1,10 | 1,6 | 0,35 | 0,012 |
| B | Ref | BM3 | - | BM2 | 0,89 | 1,55 | 5,2 | 1,25 | - |
| | 1 | BM1 | 5% | BM2 | 0,76 | 1,27 | 1,5 | 0,32 | - |
| | 2 | BM1 | 3% | BM2 | 0,85 | 1,23 | 2,2 | 0,55 | - |
| | 3 | BM1 | 1% | BM2 | 0,82 | 1,08 | 3,5 | 0,82 | - |
| | 4 | BM4 | 5% | BM2 | 0,86 | 1,35 | 1,1 | 0,30 | - |
| | 5 | BM6 | 5% | BM2 | 0,93 | 1,50 | 1,0 | 0,28 | - |
| | | | *atro* | | *N*/*mm²* | *N*/*mm²* | *mg*/*100g atro* | *mg*/*l* | *ppm* |
| C | Ref | BM3 | - | BM2 | 0,66 | 0,80 | 4,9 | 1,08 | 0,122 |
| | 1 | BM1 | - | BM2 | 0,52 | 0,56 | 4,9 | 1,15 | 0,165 |
| | 2 | BM1 | 1% | BM2 | 0,83 | 0,72 | 3,6 | 0,79 | 0,101 |
| | 3 | BM1 | 5% | BM2 | 0,78 | 1,06 | 1,6 | 0,35 | 0,012 |
| | 4 | BM4 | - | BM2 | 0,36 | 0,38 | 4,8 | 1,05 | 0,150 |
| D | Ref | BM5 | - | BM5 | 0,95 | 1,70 | - | - | - |
| | 1 | BM4 | - | BM5 | 0,75 | 1,60 | - | - | - |
| E | Ref | BM6 | - | BM6 | * | * | * | * | * |

| | | | | | | | | | |
|---|---|---|---|---|---|---|---|---|---|
| *: es konnte keine Platte unter den angegebenen Pressbedingungen hergestellt werden. Erst ab einem doppelt so hohen Presszeitfaktor wurden stabile Platten erhalten. #: Bezeichnung/Nummer der Platte | | | | | | | | | |

## Patentansprüche

1. Mehrschichtiger lignucelluiosehaltiger Formkörper aus
A) einer Mittelschicht oder mehreren Mittelschichten, enthaltend lignocellulosehaltige Partikel, welche erhältlich ist/sind durch Verwendung eines Bindemittels (a) und
B) einer Deckschicht oder mehreren Deckschichten, enthaltend lignocellulosehaltige Partikel, welche erhältlich ist/sind durch Verwendung eines Bindemittels (b),
wobei das Bindemittel (a) ausgewählt wird aus der Gruppe bestehend aus (a1) Formaldehydharzen und (a2) einem organischen Isocyanat mit mindestens zwei Isocyanatgruppen;
**dadurch gekennzeichnet, dass** das Bindemittel (b) folgende Komponenten enthält:
eine wässrige Komponente (I) enthaltend
(i) ein Polymer A, welches aus folgenden Monomeren aufgebaut ist:
a) 70 bis 100 Gew.-% wenigstens einer ethylenisch ungesättigten Mono- und/oder Dicarbonsäure (Monomer(e) A1) und
b) 0 bis 30 Gew.-% wenigstens eines weiteren ethylenisch ungesättigten Monomeren, welches sich von den Monomeren A1 unterscheidet (Monomer(e) A2)
und gegebenenfalls
(ii) einen niedermolekularen Vernetzer mit mindestens zwei funktionellen Gruppen welche ausgewählt sind aus der Gruppe Hydroxy, Carbonsäure und deren Derivate, primäres, sekundäres und tertiäres Amin, Epoxy, Aldehyd
und gegebenenfalls eine Komponente (II) als wässrige Dispersion, enthaltend
ein oder mehrere Polymer(e) M, welches aus folgenden Monomeren aufgebaut ist:
a) 0 bis 50 Ges.-% wenigstens eines ethylenisch ungesättigten Monomeren, welches wenigstens eine Epoxid- und/oder wenigstens eine Hydroxyalkylgruppe enthält (Monomer(e) M1), und
b) 50 bis 100 Gew.-% wengistens eines weiteren ethylenisch ungesättigten Monomeren, welches sich von den Monomeren M1 unterscheidet (Monomer(e) M2)
sowie gegebenenfalls übliche Additive als Komponente (III)
und wobei, das Bindemittel (b) für den Fall, daß das Bindemittel (a) ein Formaldehydharz enthält, Formaldehydfänger enthält.

2. Mehrschichtiger lignucellulosehaltiger Formkörper gemäß Anspruch 1, **dadurch gekennzeichnet, dass** das Bindemittel (b) einen niedermolekularen Vernetzer (ii) und keine Komponente (II) enthält.

3. Mehrschichtiger lignucellulosehaltiger Formkörper gemäß Anspruch 1, **dadurch gekennzeichnet, dass** das Bindemittel (b) keinen niedermolekularen Vernetzer (ii), jedoch eine Komponente (II) enthält.

4. Mehrschichtiger lignucellulosehaltiger Formkörper gemäß Anspruch 1, **dadurch gekennzeichnet, dass** das Bindemittel (b) sowohl einen niedermolekularen Vernetzer (ii) als auch enie Komponente (II) enthält.

5. Mehrschichtiger lignucellulosehaltiger Formkörper gemäß Anspruch 1 bis 4, **dadurch gekennzeichnet, daß** er dreischichtig ist, mit einer Mittelschicht A) und zwei Deckschichten B).

6. Mehrschichtiger lignucellulosehaltiger Formkörper gemäß Anspruch 1 bis 5, **dadurch gekennzeichnet, daß** das Bindemittel (a) lediglich ein Formaldehydharz (a1) ist.

7. Mehrschichtiger lignucellulosehaltiger Formkörper gemäß Anspruch 1 bis 6, **dadurch gekennzeichnet, daß** das Bindemittel (a) lediglich ein organisches Isocyanat mit mindestens zwei Isocyanatgruppen (a1) ist.

8. Mehrschichtiger lignucellulosehaltiger Formkörper gemäß Anspruch 1 bis 7, **dadurch gekennzeichnet, daß** das Bindemittel (a) die Komponente (a1), im Bereich von 70 bis 99,9 Gew.-% und die Komponente (a2) im Bereich von 0,1 bis 30 Gew.%, jeweils bezogen auf die Summe (a1) und (a2) der reinen unverdünnten Substanzen, anthält.

9. Mehrschichtiger lignucellulosehaltiger Formkörper gemäß Anspruch 1 bis 8, in Form einer Platte.

10. Verfahren zur Herstellung eines mehrschichtigen lignocellulosehaltigen Formkörpers wie in den Ansprüchen 1 bis 9 definiert, **dadurch gekennzeichnet, dass** man die Lignocellulosepartikel für die Mittelschicht oder die Mittelschichten A) mit dem Bindemittel (a) in Berührung bringt, die Lignocellulosepartikel für die Deckschicht oder die Deckschichten B) mit dem Bindemittel (b) in Berührung bringt, gemäß der gewünschten Reihenfolge übereinanderschichtet und bei erhöhter Temperatur verpresst.

11. Verwendung eines mehrschichtigen lignocellulosehaltigen Formkörpers wie in den Ansprüchen 1 bis 9 definiert, zur Herstellung von Gegenständen aller Art und im Baubereich.

12. Verwendung eines mehrschichtigen lignocellulosehaltigen Formkörpers nach Anspruch 11, **dadurch gekennzeichnet, dass** die Gegenstände aller Art Möbel, Möbelteile, Verpackungsmaterialien oder Kraftfahrzeuge sind und dass der Baubereich den Hausbau und Innenausbau betrifft.

## Claims

1. A multilayer lignocellulose-containing folding comprising
A) a middle layer or a plurality of middle layers comprising lignocellulose-containing articles which is/are obtainable by using a binder (a) and
B) a covering layer or a plurality of covering layers comprising lignocellulose-containing particles which is/are obtainable by using a binder (b),
the binder (a) being selected from the group consisting of (a1) formaldehyde resins and (a2) an organic isocyanate heaving at least two isocyanate groups;
whereon the blinder (b) comprised the hollowing components:
an aqueous component (I) comprising
(i) a polymer A which is composed of the following monomers:
a) from 70 to 100% by weight of at least one ethylenically unsaturated mono- and/or dicarboxylic acid (monomer(s) A1) and
b) from 0 to 30% by weight of at least one further ethylenically unsaturated monomer which differs from the monomers A1 (monomer(s) A2)
and, optionally,
(ii) a low molecular weight crosslinker having at least two functional groups which are selected from the group consisting of hydroxy, carboxyl and derivatives thereof, primary, secondary and tertiary amine, epoxy, aldehyde
and, optionally, a component (II), as an aqueous dispersion, comprising
one or more polymer(s) M which is composed of the following monomers:
a) from 0 to 50% by weight of at least one ethylenically unsaturated monomer which comprise at least one epoxide and/or at least one hydroxyalkyl group (monomer(s) M1) and
b) from 50 to 100% by weight of at least one further ethylenically unsaturated monomer which differs from the monomers M1 (monomer(s) M2)
and, optionally, customary additives as component (III),
and, where the blinder (a) comprised a formaldehyde resin, the blinder (b) comprising formaldehyde scavengers.

2. The multilayer lignocellulose-containing molding according to claim 1, wherein the binder (b) comprises a low molecular weight crosslinker ((ii) and no component (II).

3. The multilayer lignocellulose-containing molding according to claim 1, wherein the blinder (b) comprises no low molecular weight crosslinker (ii), but comprises a component (II).

4. The multilayer lignocellulose-containing molding according to claim 1, wherien the blinder (b) comprises both a low molecular weight crosslinker (ii) and a component (II).

5. The multilayer lignocellulose-containing molding according to claims 1 to 4, which is in the form of three layers, comprising a middle layer A) and two covering layers B).

6. The multilayer lignocellulose-containing molding according to claims 1 to 5, wherein the blinder (a) is only a formaldehyde resin (a1).

7. The multilayer lignocellulose-containing molding according to claims 1 to 6, therein the blinder (a) is only an organic isocyanate having at least two Isocyanate groups (a1).

8. The multilayer lignocellulose-containing molding according to claims 1 to 7, wherein the binder (a) comprised the component (a1) in the range from 70 to 99.9% by weight and the component (a2) in the range from 0.1 to 30% by weight, based in each case on the sum of (a1) and (a2) of the pure undiluted substances.

9. The multilayer lignocellulose-containing moulding according to claims 1 to 8, in the form of a board.

10. A process for the production of a multilayer lignocellulose-containing molding as defined in claims 1 to 9, which comprised bridging the lignocellulose particles for the middle layer or the middle layers (A) intro contact with the blinder (a), bringing the lignocellulose, particle for the covering layer or the covering layers (B) into contact with the blinder (b), arranging them in layers one of top of the other according to the desired sequence and pressing them at elevated temperature.

11. The use of a multilayer lignocellulose-containing molding as defined in claims 1 to 9 for the production of article of all types and in the construction sector.

12. The use of a multilayer lignocellulose-containing molding according to claim 11, whereon the articles of all types are pieces of furniture, furniture parts, packaging materials or motor vehicle and wherein the construction sector relates to house construction and interior finishing.

## Revendications

1. Corps moulé multicouche contenant de la lignocellulose, constitué
A) d'une couche médiane ou de plusieurs couches médianes, contenant des particules contenant de la lignocellulose, qui peut/peuvent être obtenue(s) par utilisation d'un liant (a) et
B) d'une couche de recouvrement ou de plusieurs couches de recouvrement, qui peut/peuvent être obtenues par utilisation d'un liant (b),
le liant (a) étant choisi dans le groupe constitué par (a1) des résines formaldéhyde et (a2) un isocyanate organique comportant au moins deux groupes isocyanate ;
**caractérisé en ce que** le liant (b) contient les composants suivantes :
un composant aqueux (I) contenant
(i) un polymère A, qui est constitué des monomères suivantes :
a) 70 à 100 % en poids d'au moins un acide monocarboxylique et/ou acide dicarboxylique à insaturation éthylénique (monomère (s) A1) et
b) 0 à 30 % en poids d'au moins un autre monomètre à insaturation éthylénique, qui est diffèrent des monomères A1 (monomère(s) A2)
et éventuellement
(ii) un agent de réticulation de faible masse moléculaire, comportant au moins deux groupes fonctionnels qui sont choisis dans l'ensemble constitué par les groupes hydroxy, carboxy et ses dérivés, amino primaire, secondaire et tertiaire, époxy, aldéhyde
et éventuellement un composent (II) sous forme de dispersion aqueuse, contenant
un ou plusieurs polymère(s) M, qui est/sont constitué(s) des monomères suivants :
a) 0 à 50 % en poids d'au moins un monomètre à insaturation éthylénique, qui contient au moins un groupe époxy et/ou au moins un groupe hydroxyalkyle (monomère(s) M1), et
b) 50 à 100 % en poids d'au moins un autre monomère à insaturation éthylénique, quai est diffèrent des monomères M1 (monomère(s) M2)
ainsi qu'éventuellement des additifs usuels en tant que composant (III)
et dans le cas où le liant (a) contient une résine formaldéhyde, le liant (b) contenant un capteur de formaldéhyde.

2. Corps moulé multicouche contenant de la Lignocellulose selon la revendication 1, **caractérisé en ce que** le liant (b) contient un agent de réticulation de faible masse moléculaire (ii) et ne contient pas de composant (II).

3. Corps moulé multicouche contentant de la lignocellulose, selon la revendication 1, **caractérisé en ce que** le liant (b) ne contient pas d'agent de réticulation de faible masse moléculaire (ii) ni de composant (II).

4. Corps moulé multicouche contentant de la lignocellulose selon la revendication 1, **caractérisé en ce que** le liant (b) contient aussi bien un agent de réticulation de faible masse moléculaire (ii) qu'un composant (II).

5. Corps moulé multicouche convenant de la lignocellulose selon l'une quelconque des revendication 1 à 4, **caractérisé en ce qu'**il est tricouche, avec une couche médiane A) et deux couches de recouvrement B).

6. Corps moulé multicouche contenant de la lignocellulose selon l'une quelconque des revendications 1 à 5, **caractérisé en ce que** le liant (a) est uniquement une résiné formaldéhyde (a1).

7. Corps moulé multicouche convenant de la lignocellulose selon l'une quelconque que des revendications 1 à 6, **caractérisé en ce que** le liant (a) est uniquement un isocyanate organique comportant au moins deux groupes isocyanate (a1).

8. Corps moulé multicouche contenant de la lignocellulose selon l'une quelconque des revendication 1 à 7, **caractérisé en ce que** le liant (a) contient le composent (a1) dans la plage de 70 à 99,9 % en poids et le composant (a2) dans la plage de 0,1 à % en poids, chaque fois par rapport à la somme (a1) et (a2) des substances pures non diluées.

9. Corps moulé multicouche contenant de la Lignocellulose selon l'une quelconque des revendications 1 à 8, sous forme d'une planque.

10. Procédé pour la production d'un corps moulé multicouche contenant de la lignocellulose, tel que défini dans les revendications 1 à 9, **caractérisé en ce qu'**on met en contact avec le liant (a) les particules de lignocellulose pour la couche médiane ou les couches médianes A), on met en contant avec le liant (b) les particules de lignocellulose pour la couche de recouvrement ou les couches de recouvrement B), on les superpose selon l'ordre désiré et on les presse à température élevée.

11. Utilisation d'un corps moulé multicouche contenant de la lignocellulose, tel que défini dans les revendications 1 à 9, pour la fabrication d'articles de tout type et dans le secteur du bâtiment.

12. Utilisation d'un corps moulé multicouche contenant de la lignocellulose selon la revendication 11, **caractérisée en ce que** les articles de tout type sont des meubles, des parties de meubles, des matériaux d'emballage ou des automobile et **en ce que** le secteur du bâtiment concerne la constriction de maisons et l'aménagement inférieur.
